# EUROPÄISCHE PATENTSCHRIFT

(11) **EP 3 856 814 B1**
(45) Veröffentlichungstag und Bekanntmachung des Hinweises auf die Patenterteilung: **14.06.2023**
(21) Anmeldenummer: 19772752.2
(22) Anmeldetag: 25.09.2019
(51) Int. Cl.: C08G 18/73, C08G 18/75, C08G 18/72, C08G 18/42, C08G 18/08, C08G 18/66, C08G 18/38, C09J 175/06, C08G 18/12, C08G 18/10

(54) **DISPERSIONSKLEBSTOFFE**
DISPERSION ADHESIVESTITLE
ADHÉSIF EN DISPERSION

(30) Priorität: 27.09.2018 EP 18197310
(43) Veröffentlichungstag der Anmeldung: 04.08.2021
(73) Patentinhaber: Covestro Intellectual Property GmbH & Co. KG, 51373 Leverkusen (DE)
(72) Erfinder: KRAUS, Harald, 51371 Leverkusen (DE); LIBERATI, Robert, 50354 Hürth- Efferen (DE); KUEKER, Peter, 51377 Leverkusen (DE); MELCHIORS, Martin, 42799 Leichlingen (DE)
(74) Vertreter: Levpat
(86) Internationale Anmeldenummer: PCT/EP2019/075849
(87) Internationale Veröffentlichungsnummer: WO 2020/064829

(56) Entgegenhaltungen:
- WO-A1-2013/053786
- WO-A1-2014/182170
- DATABASE WPI Week 201742 Thomson Scientific, London, GB; AN 2017-27800D XP002788625, & CN 106 590 506 A (WANHUA CHEM GROUP CO LTD) 26. April 2017 (2017-04-26)

## Beschreibung

Die Erfindung betrifft Formulierungen wässriger Dispersionsklebstoffe auf Basis wässriger Polyurethan- bzw. Polyurethan-Harnstoffdispersionen, ein Verfahren zu deren Herstellung, sowie die Verwendung der Dispersionsklebstoffe zur Verklebung von Schaumsubstraten nach dem Sprühkoagulationsverfahren.

Bei der Verklebung von Schaumsubstraten mit anderen Substraten, beispielsweise bei den Kombinationen Schaum-Schaum, Schaum-Holz und Schaum-Kunststoff, werden überwiegend Polychloropren-Dispersionsklebstoffe nach dem Sprühkoagulationsverfahren eingesetzt. Bei diesem Verfahren werden der Klebstoff sowie ein Koagulationsmittel separat in eine Sprühpistole gefördert, im Sprühstrahl vermischt und koaguliert. Da die Vermischung erst im Sprühstrahl stattfindet, ist keine Topfzeit zu beachten. Zudem verbleibt der koagulierte Klebstoff an der zu verklebenden Substratoberfläche und diffundiert nicht oder nur zu einem geringen Teil in die Porenstruktur der Schaumsubstrate. Häufig werden dabei hohe Anfangsfestigkeiten, ausreichend lange offene Zeiten und gute Wärmefestigkeiten erzielt.

Wichtige Anwendungsgebiete für dieses Sprühkoagulationsverfahren sind die Herstellung von Matratzen und Sitzmöbeln. Insbesondere aus den skandinavischen Ländern kommt die Forderung nach Chlor-freien Alternativen für die Polychloropren-Dispersionsklebstoffe, um beispielsweise die Anforderungen des Nordic Ecolabels erfüllen zu können. Zusätzlich sollen sie sich durch hohe Anfangsfestigkeiten, eine ausreichend lange offene Zeit sowie gute Wärmefestigkeiten auszeichnen. Da bei der Herstellung von Sitzmöbeln, insbesondere von Bürostühlen, häufig unpolare Substrate wie Polypropylensubstrate oder Partikel-gefüllte Polypropylensubstrate verwendet werden, wird eine ausreichend gute Haftung nicht nur bei der Verklebung von Schaum auf Schaum und Schaum auf Holz, sondern insbesondere auch bei der Verklebung von Schaum auf unpolaren Oberflächen gefordert.

Klebstoffe auf Basis von wässrigen Polyurethan-Dispersionen haben sich weltweit in anspruchsvollen industriellen Anwendungen etabliert, zum Beispiel bei der Schuhfertigung, der Verklebung von Teilen für die KFZ-Innenausstattung, der Folienlaminierung oder der Verklebung von textilen Substraten.

Bei der Verwendung solcher Klebstoffe auf Basis von wässrigen Polyurethan-Dispersionen zum Kleben von Substraten wird häufig nach dem Thermoaktivierverfahren gearbeitet. Hierbei wird die Dispersion auf das Substrat aufgebracht, und nach vollständiger Verdunstung des Wassers wird die Klebstoffschicht durch Erwärmen, z. B. mit einem Infrarotstrahler, aktiviert und in einen klebfähigen Zustand überführt. Die Temperatur, bei der der Klebstofffilm klebrig wird, bezeichnet man als Aktiviertemperatur.

Bei der Verwendung von Polyurethan- bzw. Polyurethan-Polyharnstoff-Dispersionen kann aber auch nach dem Verfahren der Nassverklebung gearbeitet werden, d.h. die Durchführung der Verklebung erfolgt unmittelbar nach dem Klebstoffauftrag. Bis zum Abbinden des Klebstoffes ist dabei eine mechanische Fixierung der zu verbindenden Teile erforderlich. Dieses Verfahren wird häufig zur Verklebung von Holz oder textilen Substraten verwendet.

Sowohl das Thermoaktivierverfahren als auch das Verfahren der Nassverklebung sind für die Verklebung von Schaumsubstraten wenig geeignet. Insbesondere die langsame Verdampfung des Wassers erfordert lange Wartezeiten zwischen Klebstoffauftrag und Klebevorgang oder entsprechende Trockenanlagen. Zudem kann ein nicht unerheblicher Teil des Klebstoffs vor oder während der Trocknung in die Poren der Schaumsubstrate eindiffundieren und steht dann nicht mehr für die eigentliche Klebung zur Verfügung.

Die im Markt etablierten Klebstoffe auf Basis von wässrigen Polyurethan-Dispersionen eignen sich in der Regel nicht für die Anwendung des Sprühkoagulationsverfahrens, da sie häufig nicht ausreichend schnell koagulieren und insbesondere auf schwierigen Substraten, wie zum Beispiel Schäumen mit hoher Rückstellkraft, keine ausreichende Haftung und Festigkeit zeigen. Da die Dispersionspolymere Urethan- und Harnstoffgruppen als polare Gruppen sowie ionische oder nichtionische hydrophilierende Gruppen enthalten, wird insbesondere bei der Verklebung von Schaum auf Polypropylensubstraten keine oder lediglich eine unzureichende Haftung erzielt.

In der WO 2013/053786 A1 werden wässrige Polyurethandispersionen beschrieben, deren Polymer eine Schmelztemperatur im Bereich von 30 °C bis 50 °C, bestimmt durch dynamische Differenz-Thermoanalyse gemäß DIN 65467 bei einer Aufheizrate von 20 K/min, aufweist, wobei das Polymer aus zwei unterschiedlich kristallisierenden Polyesterpolyolen in vorgegebenen Mengenverhältnissen erhältlich ist. Diese Polyurethandispersionen eignen sich in erster Linie als Kaltkontaktklebstoffe, sind aber auch mittels Sprühkoagulationsverfahren einsetzbar. Allerdings sind die dabei erzielbaren Festigkeiten für die meisten Schaumverklebungsanwendungen unzureichend. Insbesondere auf unpolaren Oberflächen wird keine ausreichende Haftung erzielt.

Mit Luphen^{®} D DS 3548 der BASF AG (Ludwigshafen, Deutschland) wird eine Epoxidharzmodifizierte Polyurethandispersion angeboten, die unter anderem auch für das Sprühkoagulationsverfahren geeignet sein soll. Basis des dabei verwendeten Epoxidharzes ist Bisphenol-A-diglycidylether. Da Bisphenol A und daraus hergestellte Folgeprodukte bezüglich einer möglichen endokrinen Wirkung insbesondere von Endverbrauchern äußerst kritisch gesehen und deshalb in der Regel abgelehnt werden, verlangt der Markt nach Klebstoffen und sonstigen Produkten, die frei von Bisphenol A sind.

Die WO 2014/182170 A1 beschreibt die Durchführung des Sprühkoagulationsverfahrens mittels eines speziellen Airless-Spray-Verfahrens. Dazu werden sowohl Mischungen aus Polychloroprendispersionen und Tackifierdispersionen als auch aus Polyurethandispersionen und Tackifierdispersionen eingesetzt. Diese werden in dieser Schrift jedoch nicht weiter spezifiziert. Als Anwendungsgebiete werden Schaumverklebungen im Bereich Matratzen- und Möbelfertigung genannt. Wie man Haftung auf unpolaren Oberflächen erzielen kann, ist ebenfalls nicht beschrieben.

In US 2015/0079339 A1 werden Mehrschichtartikel, unter anderem auch aus Schaumsubstraten bestehend, beschrieben, die durch Verklebung mit einer Polyurethandispersion im Temperaturbereich von 100 bis 200 °C hergestellt werden. Um eine Penetration der Klebstoffdispersion in die Poren der Substrate zu verhindern, können optional Koagulationsmittel zugesetzt werden, wobei das Sprühkoagulationsverfahren aber nicht zum Einsatz kommt. Es gibt keinen Hinweis, ob auch auf unpolaren Oberflächen Haftung erzielt werden kann.

Die Aufgabe der vorliegenden Erfindung bestand somit in der Bereitstellung einer chlor- und Bisphenol-A-freien Alternative für Polychloropren-Dispersionsklebstoffe für die Verklebung von Schaumsubstraten nach dem Sprühkoagulationsverfahren, die die Nachteile des Standes der Technik nicht aufweisen und die auch auf schwierigen Substraten, insbesondere bei Schäumen mit hoher Rückstellkraft, ausreichende Haftung und Festigkeit zeigen und die sich zusätzlich durch Haftung auf unpolaren Oberflächen auszeichnen.

Überraschend wurde nun gefunden, dass wässrige Klebstoffformulierungen, enthaltend eine Mischung aus einer wässrigen Polyurethan- bzw. Polyurethan-Harnstoff-Dispersion, einem Weichmacherharz sowie einem Tackifierharz sich für die Verklebung von Schaumsubstraten nach dem Sprühkoagulationsverfahren eignen, die Nachteile des Standes der Technik nicht aufweisen und auch eine Verklebung von Schaumsubstraten mit Substraten mit unpolaren Oberflächen ermöglichen.

Gegenstand der vorliegenden Erfindung sind somit Formulierungen gemäss Anspruch 1 enthaltend eine Mischung aus
I. einer wässrigen Polyurethan- bzw. Polyurethan-Harnstoff-Dispersion, enthaltend als disperse Phase ein Polymer A), das nach der Trocknung teilkristallin oder kristallin ist und eine Schmelztemperatur im Bereich von 30 bis 80 °C und eine Schmelzenthalpie von >_ 35 J/g besitzt,
II. mindestens einem Weichmacherharz B)
III. mindestens einem Tackifierharz C)

dadurch gekennzeichnet, dass die Mischung, bezogen auf den insgesamt enthaltenen Feststoff,
60 - 90 Gew.-% Polymer A),
5 - 20 Gew.-% Weichmacherharz B) und
5 - 20 Gew.-% Tackifierharz C) enthält
und sich die Mengenanteile von A), B) und C) zu 100 Gew.-% addieren.

Bevorzugt enthält die Mischung, bezogen auf den insgesamt enthaltenen Feststoff,
66 - 85 Gew.-% Polymer A),
8 - 18 Gew.-% Weichmacherharz B) und
7 - 16 Gew.-% Tackifierharz C),
wobei sich die Mengenanteile von A), B) und C) zu 100 Gew.-% addieren.

Besonders bevorzugt enthält die Mischung, bezogen auf den Feststoff,
70 - 81 Gew.-% Polymer A),
10 - 16 Gew.-% Weichmacherharz B) und
9 - 14 Gew.-% Tackifierharz C),
wobei sich die Mengenanteile von A), B) und C) zu 100 Gew.-% addieren.

In einer ganz besonders bevorzugten Ausführung der vorliegenden Erfindung enthält die Mischung, bezogen auf den Feststoff,
72 - 80 Gew.-% Polymer A),
10 - 15,5 Gew.-% Weichmacherharz B) und
10 - 12,5 Gew.-% Tackifierharz C),
wobei sich die Mengenanteile von A), B) und C) zu 100 Gew.-% addieren.

Die im Zusammenhang mit der vorliegenden Erfindung als Polyurethan-Dispersionen bezeichneten Dispersionen enthalten als disperse Phase Polymere, die Polyurethane im engeren Sinn sein können, also solche Polymere, die durch Polymerisation von Polyolen und Polyisocyanaten erhalten werden, aber es können auch solche sein, bei denen als Aufbau-Komponenten auch Mono- und/oder Diamine eingesetzt werden, gegebenenfalls als Kettenverlängerer. Somit werden die erfindungsgemäß einsetzbaren Dispersionen als wässrige Polyurethan- bzw. Polyurethan-HarnstoffDispersionen bezeichnet.

Als teilkristallin oder kristallin wird ein Polymer bezeichnet, wenn es in der DSC-Messung nach DIN 65467 bei einer Aufheizrate von 20 K/min einen Schmelzpeak aufweist. Der Schmelzpeak wird durch das Aufschmelzen regelmäßiger Teilstrukturen im Polymer verursacht. Die Schmelztemperatur der aus den erfindungsgemäßen Formulierungen erhaltenen Polymere bzw. Polymerschichten liegt dabei bevorzugt in einem Bereich von 35 °C bis 80 °C, besonders bevorzugt von 40 °C bis 70 °C, ganz besonders bevorzugt von 42 °C bis 55 °C. Die Schmelzenthalpie der aus den erfindungsgemäßen Formulierungen erhaltenen Polymerschichten ist >_ 35 J/g, bevorzugt >_ 40 J/g, besonders bevorzugt >_ 45 J/g. Ausgewertet wird die erste Aufheizung, um auch langsam kristallisierende Polymere zu erfassen.

Während die Lehre der vorliegende Erfindung grundsätzlich mit jedem dispergierten Polyurethan- bzw. Polyurethan-Harnstoff-Polymer als Polymer A) verwirklicht werden kann, ist erfindungsgemäß das Polymer A) bevorzugt aufgebaut aus
A(i). mindestens einem kristallinen oder teilkristallinen difunktionellen Polyesterpolyol mit einem zahlenmittleren Molekulargewicht von wenigstens 400 g/mol und einer Schmelztemperatur von wenigstens 35 °C und einer Schmelzwärme von wenigstens 35 J/g
A(ii). optional mindestens einer difunktionellen Polyolkomponente mit einem zahlenmittleren Molekulargewicht von 62 bis 399 g/mol,
A(iii). einer Isocyanatkomponente
A(iv). mindestens einer gegenüber Isocyanat reaktiven Komponente, die mindestens eine ionische oder potentiell ionische Gruppe trägt,
   und
A(v). optional weiteren gegenüber Isocyanat reaktiven Komponenten.

Die erfindungsgemäßen wässrigen Dispersionen enthalten 15 bis 60 Gew.-% Polymer und 40 bis 85 % Wasser, bevorzugt 30 bis 50 Gew.-% Polymer und 50 bis 70 Gew.-% Wasser, besonders bevorzugt 40 bis 50 Gew.-% Polymer und 50 bis 60 Gew.-% Wasser.

Das Polymer enthält 50 bis 95 Gew.-% des Bestandteils A(i), 0 bis 10 Gew.-% des Bestandteils A(ii), 4 bis 25 Gew.-% des Bestandteils A(iii), 0,5 bis 10 Gew.-% des Bestandteils A(iv) und 0 bis 30 Gew.-% des Bestandteils A(v), wobei die Summe der Bestandteile 100 Gew.-% ergibt.

In einer bevorzugten Form der Erfindung enthält das Polymer 65 bis 92 Gew.-% des Bestandteils A(i), 0 bis 5 Gew.-% des Bestandteils A(ii), 6 bis 15 Gew.-% des Bestandteils A(iii), 0,5 bis 5 Gew.-% des Bestandteils A(iv) und 0 bis 25 Gew.-% des Bestandteils A(v), wobei die Summe der Bestandteile 100 Gew.-% ergibt.

In einer besonders bevorzugten Form der Erfindung enthält das Polymer 75 bis 92 Gew.-% des Bestandteils A(i)), 0 bis 5 Gew.-% des Bestandteils A(ii), 8 bis 15 Gew.-% des Bestandteils A(iii), 0,5 bis 4 Gew.-% des Bestandteils A(iv) und 0 bis 15 Gew.-% des Bestandteils A(v), wobei die Summe der Bestandteile 100 Gew.-% ergibt.

In einer ganz besonders bevorzugten Form der Erfindung enthält das Polymer 80 bis 90 Gew.-% des Bestandteils A(i), 0 bis 3 Gew.-% des Bestandteils A(ii), 8 bis 14 Gew.-% des Bestandteils A(iii), 0,5 bis 3 Gew.-% des Bestandteils A(iv) und 0 bis 10 Gew.-% des Bestandteils A(v), wobei die Summe der Bestandteile 100 Gew.-% ergibt.

Als kristalline oder teilkristalline difunktionelle Polyesterpolyole A(i) kommen insbesondere lineare oder auch schwach verzweigte Polyesterpolyole in Betracht, die auf Dicarbonsäuren und/oder deren Derivaten, wie Anhydride, Ester oder Säurechloride und bevorzugt aliphatischen, linearen Polyolen basieren. Auch Mischungen von Dicarbonsäuren und/oder deren Derivate sind geeignet. Geeignete Dicarbonsäuren sind beispielsweise Adipinsäure, Bernsteinsäure, Sebacinsäure oder Dodecandisäure. Bevorzugt sind Bernsteinsäure, Adipinsäure und Sebacinsäure und deren Mischungen, besonders bevorzugt sind Bernsteinsäure und Adipinsäure und deren Mischungen, ganz besonders bevorzugt ist Adipinsäure. Diese werden in Mengen von mindestens 90 mol-%, bevorzugt von 95 bis 100 mol-%, bezogen auf die Gesamtmenge aller Carbonsäuren, eingesetzt.

Die difunktionellen Polyesterpolyole A(i) können beispielsweise durch Polykondensation von Dicarbonsäuren mit Polyolen hergestellt werden. Die Polyole haben bevorzugt ein Molgewicht von 62 bis 399 g/mol, bestehen aus 2 bis 12 C-Atomen, sind vorzugsweise unverzweigt, difunktionell und weisen bevorzugt primäre OH-Gruppen auf.

Beispiele für Polyole, die für die Herstellung der Polyesterpolyole A(i) verwendet werden können, sind mehrwertige Alkohole, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische.

Bevorzugte Polyolkomponenten für die Polyesterpolyole A(i) sind Ethandiol-1,2, Butandiol-1,4 und Hexandiol-1,6, besonders bevorzugt sind Butandiol-1,4 und Hexandiol-1,6, ganz besonders bevorzugt ist Butandiol-1,4.

Die Polyesterpolyole A(i) können aus einem oder mehreren Polyolen aufgebaut sein. In einer bevorzugten Ausführungsform der vorliegenden Erfindung sind sie nur aus einem Polyol aufgebaut.

Wenn die kristallinen oder teilkristallinen difunktionellen Polyesterpolyole mit einem zahlenmittleren Molekulargewicht von wenigstens 400 g/mol und einer Schmelztemperatur von wenigstens 35 °C eine Schmelzwärme von wenigstens 50 J/g aufweisen, so hat das unter Verwendung desselben hergestellte Polymer regelmäßig eine Schmelzwärme von >_ 35 J/g. Falls gewünscht kann eine Adjustierung der Schmelzwärme des Polymers durch eine leichte Veränderung des Gehaltes an Polyesterpolyol A(i) in der Zusammensetzung oder durch eine geringe Variation der Schmelzwärme des Polyesterpolyols erreicht werden. Diese Maßnahmen erfordern lediglich orientierende Versuche und liegen völlig innerhalb der praktischen Erfahrung des Durchschnittsfachmanns auf diesem Gebiet.

Die Herstellung von Polyesterpolyolen A(i) ist aus dem Stand der Technik bekannt.

Das zahlenmittlere Molekulargewicht der Polyesterpolyole A(i) liegt vorzugsweise zwischen 400 und 4000 g/mol, weiter bevorzugt zwischen 1000 und 3000 g/mol, besonders bevorzugt zwischen 1500 und 2500 g/mol, ganz besonders bevorzugt zwischen 1800 und 2400 g/mol.

Die Schmelztemperatur der kristallinen bzw. teilkristallinen Polyesterpolyole liegt in der Regel mindestens bei 35 °C, bevorzugt zwischen 40 und 80°C, besonders bevorzugt zwischen 42 und 60°C und ganz besonders bevorzugt zwischen 45 und 52°C. Die Schmelzwärme beträgt >_ 35 J/g, bevorzugt >_ 40 J/g und besonders bevorzugt >_ 50 J/g.

Als Aufbaukomponente A(ii) geeignete difunktionelle Polyolkomponenten mit einem Molekulargewicht von 62 bis 399 sind beispielsweise die zur Herstellung der Polyesterpolyole A(i) genannten Polyole. Auch niedermolekulare Polyesterdiole, Polyetherdiole, Polycarbonatdiole oder andere Polymerdiole sind prinzipiell geeignet, sofern sie ein Molekulargewicht von 62 bis 399 Dalton aufweisen.

Als Aufbaukomponenten A(iii) sind beliebige organische Verbindungen geeignet, die min-destens zwei freie Isocyanatgruppen pro Molekül aufweisen. Bevorzugt werden Diisocyanate Y(NCO)₂ eingesetzt, wobei Y für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoff-Atomen, einen zweiwertigen aromatischen Kohlenwasserstoffrest mit 6 bis 15 KohlenstoffAtomen oder einen zweiwertigen araliphatischen Kohlenwasserstoffrest mit 7 bis 15 Kohlenstoffatomen steht. Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methyl-cyclohexan, 4,4'-Diisocyanato-dicyclohexyl-methan, 4,4'-Diisocyanato-dicyclohexyl-propan-(2,2), 1,4-Diisocyanatobenzol, 2,4-Diisocyanatotoluol, 2,6-Diisocyanatotoluol, 4,4'-Diisocyanatodiphenylmethan, 2,2'- und 2,4'-Diisocyanatodiphenylmethan, Tetramethylxylylendiisocyanat, p-Xylylendiisocyanat, p-Isopropylidendiisocyanat sowie aus diesen Verbindungen bestehende Gemische.

Es ist auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind z.B. durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Imino-oxadiazindion- und/oder Oxadiazintrion-Struktur. Als Beispiel für ein nicht-modifiziertes Polyisocyanat mit mehr als 2 Isocyanatgruppen pro Molekül sei z.B. 4-Isocyanatomethyl-1,8-octandiisocyanat (Nonantriisocyanat) genannt.

Besonders bevorzugte Aufbaukomponenten A(iii) sind Hexamethylendiisocyanat (HDI) und 1-Iso-cyanato-3,3,5-trimethyl-5-isocyanatomethyl-cyclohexan (IPDI) sowie deren Gemische.

Bevorzugte gegenüber Isocyanat reaktive Komponenten A(iv), die mindestens eine ionische oder potentiell ionische Gruppe tragen, sind Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und deren Alkali- und Ammoniumsalze. Beispiele sind Dimethylolpropionsäure, Dimethylolbuttersäure, Hydroxypivalinsäure, N-(2-Aminoethyl)-β-alanin, N-(2-Aminoethyl)-2-aminoethansulfonsäure, N-(2-Aminoethyl)-2-aminoethancarbonsäure Ethylendiaminpropyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III). Für die Salzbildung gut geeignet sind Natrium-, Kalium-, Lithium- und Calcium-Hydroxid sowie tertiäre Amine wie Triethylamin, Dimethylcyclohexylamin und Ethyldiisopropylamin. Es können auch andere Amine zur Salzbildung eingesetzt werden, wie z.B. Ammoniak, Diethanolamin, Triethanolamin, Dimethylethanolamin, Methydiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Weiter als Komponente A(iv) geeignet sind durch Zugabe von Säuren in kationische Gruppen überführbare Bausteine wie N-Methyl-diethanolamin.

Besonders bevorzugte Komponenten A(iv) sind solche, die über Carboxy- und/oder Carboxylat- und/oder Sulfonatgruppen verfügen.

Ganz besonders bevorzugt sind die Natriumsalze der N-(2-Aminoethyl)-2-aminoethansulfonsäure und der N-(2-Aminoethyl)-2-aminoethancarbonsäure, insbesondere der N-(2-Aminoethyl)-2-aminoethansulfonsäure. Weiterhin ganz besonders bevorzugt sind die Salze der Dimethylolpropionsäure.

Gegenüber Isocyanaten reaktive Komponenten A(v) können beispielsweise Polyoxyalkylenether, die mindestens eine Hydroxy- oder Aminogruppe enthalten, sein. Die häufig verwendeten Polyalkylenoxidpolyetheralkohole sind in an sich bekannter Weise durch Alkoxylierung geeigneter Startermoleküle zugänglich. Für die Alkoxylierungsreaktion geeignete Alkylenoxide sind insbesondere Ethylenoxid und Propylenoxid, die einzeln oder auch zusammen bei der Alkoxylierungsreaktion eingesetzt werden können.

Weitere gegenüber Isocyanat reaktive Komponenten A(v) sind beispielsweise Monoamine, Diamine und / oder Polyamine sowie deren Gemische.

Beispiele für Monoamine sind aliphatische und/oder alicyclische primäre und/oder sekundäre Monoamine wie Ethylamin, Diethylamin, die isomeren Propyl- und Butylamine, höhere linearaliphatische Monoamine und cycloaliphatische Monoamine wie Cyclohexylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin oder 2-Propanolamin. Beispiele für Diamine sind 1,2-Ethandiamin, 1,6-Hexamethylendiamin, 1-Amino-3,3,5-trimethyl-5-aminomethyl-cyclohexan (Isophorondiamin), Piperazin, 1,4-Diamino-cyclohexan und Bis-(4-amino-cyclohexyl)-methan. Weiterhin kommen Adipinsaeuredihydrazid, Hydrazin bzw. Hydrazinhydrat in Frage. Weitere Beispiele sind Aminoalkohole, d. h. Verbindungen, die in einem Molekül Amino- und Hydroxylgruppen enthalten, wie z. B. 1,3-Diamino-2-propanol, N-(2-Hydroxyethyl)-ethylendiamin oder N,N-Bis(2-Hydroxyethyl)-ethylendiamin. Beispiele für Polyamine sind Diethylentriamin und Triethylentetramin.

In einer bevorzugten Form der Erfindung enthält das erfindungsgemäße Polymer zur Einstellung der Molmasse mindestens ein Monoamin und / oder mindestens ein Diamin als gegenüber Isocyanat reaktive Komponente A(v).

Bevorzugt enthalten die wässrigen Polyurethan- bzw. Polyurethan-IIarnstoff-Dispersionen keine externen Emulgatoren.

In einer speziellen Ausführungsform der Erfindung enthält das Polymer A) einen Polyester aus Adipinsäure und Butandiol-1,4 als Komponente A(i), Butandiol-1,4 als Komponente A(ii), 1-Iso-cyanato-3,3,5-trimethyl-5-isocyanatomethyl-cyclohexan (IPDI) als Komponente A(iii), das Natriumsalz der N-(2-Aminoethyl)-2-aminoethansulfonsäure als Komponente A(iv) und Diethanolamin als Komponente A(v).

Als Weichmacher bezeichnet man chemische Substanzen, die Polymeren zugesetzt werden, um diese für den Gebrauch oder die weitere Verarbeitung weich, flexibel, dehnbar und geschmeidig zu machen.

Als Weichmacher B) werden schwerflüchtige niedermolekulare, polare Gruppen tragende Verbindungen eingesetzt. Bevorzugte Weichmacher sind Di(phenoxyethyl)formal sowie schwerflüchtige Ester auf Basis von aromat. Carbonsäuren wie z.B. Phthalsäure, Isophthalsäure, Terepthalsäure, Benzoesäure, Trimellithsäure; aliphatischen Carbonsäuren wie z.B. Maleinsäure, Fumarsäure, Bernsteinsäure, Essigsäure, Propionsäure, Buttersäure, Adipinsäure, Azelainsäure, Sebazinsäure, Zitronensäure, Cyclohexandicarbonsäure, oder Fettsäuren wie z.B. Ölsäure, Rizinolsäure oder Stearinsäure; sowie Phosphorsäure-, Sulfon- oder Alkylsulfonsäureester. Auch epoxidierte Pflanzenöle wie z.B. epoxidiertes Leinöl und epoxidiertes Sojaöl sind bevorzugt.

Besonders bevorzugt werden Di(phenoxyethyl)formal, Dibutylterephthalat, Alkylsulfonsäureester des Phenols sowie Ester auf Basis Benzoesäure. Ganz besonders bevorzugt sind Di(phenoxyethyl)-formal, Dibutylterephthalat und Dipropylenglykoldibenzoat. In einer ganz besonders bevorzugten Ausführungsform der vorliegenden Erfindung wird Di(phenoxyethyl)formal als Weichmacher B) eingesetzt.

In einer ebenfalls ganz besonders bevorzugten Ausführungsform der vorliegenden Erfindung wird Dipropylenglykoldibenzoat als Weichmacher B) eingesetzt.

Tackifierharze bezeichnet man Harze, die als Klebrigmacher wirken und die die Adhäsionsfähigkeit eines Kunststoffes oder eines Klebstoffes erhöhen.

Als Tackifierharze C) können sowohl Natur- als auch synthetische Harze eingesetzt werden, z.B. aliphatische, aromatisch modifizierte, aromatische und hydrierte Kohlenwasserstoffharze, Terpenharze, modifizierte Terpenharze und Terpenphenolharze, oder Baumharzderivate wie z.B. Kolophoniumharze, modifizierte Kolophoniumharze wie z.B. Harzester auf Basis von Kolophonium ("rosin ester"), Balsamharzderivate ("gum rosin") und Tallöl-Derivate ("tall oil rosin"). Die Tackifierharze können einzeln oder als Mischungen eingesetzt werden.

Bevorzugt werden als Tackifierharze C) Kolophoniumharze und modifizierte Kolophoniumharze eingesetzt. Besonders bevorzugt werden Harzester auf Basis von Kolophonium eingesetzt. Die Tackifier können als 100%ige Harze oder als Dispersion in den erfindungsgemäßen Formulierungen eingesetzt werden, sofern Verträglichkeit (z.B. Stabilität gegen Phasentrennung) gegeben ist.

In einer besonders bevorzugten Ausführung der der vorliegenden Erfindung werden als Komponente C) wässrige Dispersionen von Kolophoniumharzestern ("rosin ester dispersions") eingesetzt.

Bevorzugt werden die erfindungsgemäßen Formulierungen zur Verklebung nach dem Sprühkoagulationsverfahren eingesetzt. Bei diesem Verfahren werden die wässrigen Klebstoffformulierungen sowie ein Koagulationsmittel separat in einer 2K-Sprühpistole gefördert und im Sprühstrahl vermischt. Üblicherweise wird mittels Zerstäuberluft mit 0,1 - 5 bar Druck versprüht; es kann aber auch mindestens eine der beiden Komponenten Airless gefördert werden, wie z.B. in der WO 2015/137808 beschrieben. Die Koagulation der Dispersion findet im Sprühstrahl auf dem Weg zur Oberfläche des ersten Substrats statt; dabei verdunstet bereits ein Teil des in der Klebstoffdispersion enthaltenen Wassers. Das Klebstoffpolymer bildet auf der Oberfläche des ersten Substrats bei Auftreffen einen Film, der in noch nassem Zustand sofort klebrig ist. Da die Vermischung von Klebstoffdispersion und Koagulationsmittel erst im Sprühstrahl stattfindet, ist keine Topfzeit zu beachten. Aufgrund der Klebrigkeit des Polymerfilms in nassem Zustand kann die zweite Oberfläche sofort gefügt werden, idealerweise zum Beispiel unter Druck auf die Substrate gegen die Klebfläche. Die Anwendung von Druck durch Zusammenpressen der beiden Substratoberflächen ist von Vorteil, da sie die Festigkeit der Klebung erhöht. Ebenso ist es von Vorteil, wenn zumindest eines der beiden Substrate porös bzw. durchlässig gegenüber Wasser ist, um den Abtransport des Wasser aus der sich verfestigenden Klebstofffuge zu ermöglichen.

Als Koagulationsmittel kommen wässrige Lösungen von Salzen, bevorzugt von Metallen der ersten, zweiten und dritten Hauptgruppe des Periodensystems, in Frage, insbesondere, wenn sie eine gute Wasserlöslichkeit aufweisen. Bevorzugt werden Salze auf Basis zwei- oder dreiwertiger Kationen eingesetzt. Besonders bevorzugt werden Calciumchlorid, Zinksulfat oder Aluminiumsulfat eingesetzt. Ganz besonders bevorzugt wird Calciumchlorid eingesetzt. Es können auch Mischungen verschiedener Salze gemäß obiger Beschreibung als wässrige Lösung eingesetzt werden.

Die Konzentration der Salze in den als Koagulationsmittel geeigneten wässrigen Salzlösungen beträgt in der Regel 1 bis 20 % Gew.-%, bevorzugt 2 bis 10 Gew.-% und besonders bevorzugt 3 bis 4 Gew.-%. Der Anteil der wässrigen Lösung des Koagulationsmittels bezogen auf die Summe Klebstofflösung plus Koagulationsmittellösung beträgt zwischen 0,1 und 50 Gew.-%, bevorzugt zwischen 1 und 30 Gew.-%, besonders bevorzugt zwischen 8 und 20 Gew.-% und ganz besonders bevorzugt zwischen 12 und 18 Gew.-%.

Alternativ können als Koagulationsmittel auch wässrige Lösungen von anorganischen oder organischen Säuren, bevorzugt Zitronensäure, Phosphorsäure oder Kohlensäure, sowie Mischungen einer oder mehrerer o.g. Salze mit einer oder mehrerer dieser Säuren eingesetzt werden.

Die Herstellung der erfindungsgemäßen Formulierungen erfolgt bevorzugt durch Mischen der wässrigen Polyurethan- bzw. Polyurethan-Harnstoff-Dispersion mit dem Weichmacherharz und dem Tackifierharz. Dies kann in beliebiger Reihenfolge erfolgen. Bevorzugt wird die Polyurethandispersion vorgelegt und anschließend werden das Tackifierharz C) und das Weichmacherharz B) nacheinander unter Rühren zugegeben. Bevorzugt werden dabei Rührer mit ausreichend großem Scherkrafteintrag eingesetzt. Geeignete Rührer sind dem Fachmann bekannt oder können durch einfache Vorversuche ermittelt werden.

Die Verklebungen, hergestellt mit den erfindungsgemäßen Formulierungen nach dem Sprühkoagulationsverfahren, zeigen ausreichende Sofortfestigkeiten bei Schaumsubstraten mit hohem Raumgewicht von 70 kg/m³ und mehr und damit verbundener hoher Rückstellkraft sowie Haftung auf unpolaren Oberflächen, insbesondere auf Polypropylen-Substraten.

Unter einem Schaumsubstrat versteht man ein Substrat aus Schaumstoff, wobei Schaumstoffe im allgemeinen künstlich hergestellte Stoffe mit zelliger Struktur und niedriger Dichte sind. Dabei kann man zwischen offenzelligen, geschlossenzelligen sowie gemischtzelligen Schaumstoffen unterscheiden. Je nach Härtegrad teilt man die Schaumstoffe in Hart- und Weichschäume ein. Zum Schäumen eignen sich fast alle Kunststoffe. Eine wichtige Kennzahl von Schäumen ist das Raumgewicht, auch Dichte genannt. Dieses wird in kg/m³ ausgedrückt und gibt das Gewicht eines Schaumstoffblockes mit einer Kantenlänge von 1 m an. Das Raumgewicht wird als das wichtigste Merkmal zur Unterscheidung der Schaumstoffe angesehen, andere Eigenschaften hängen im gro-βen Maße davon ab. Je höher das Raumgewicht, umso stärker ist die Rückstellkraft und umso stärker sind die Anforderungen an die Sofortfestigkeiten der Klebstoffe.

Prinzipiell eignen sich die erfindungsgemäßen Formulierungen zur Verklebung aller Schaumsubstrate nach dem Sprühkoagulationsverfahren. Bevorzugt werden offenzellige und gemischtzellige Schaumsubstrate verklebt. Dabei können auch Schaumsubstrate mit hoher Raumdichte und hoher Rückstellkraft verklebt werden.

In einer bevorzugten Ausführung der Erfindung bestehen das oder die Schaumsubstrate aus Polyurethan (zum Beispiel Polyether- und Polyester-Schäume) und/oder einem Kautschuk, wie beispielsweise Naturkautschuk (NR), Styrol-Butadien-Kautschuk (SBR), Ethylen-Propylen-Dien-Polymer (EPDM), Butadien-Acrylnitril-Kautschuk (NBR) oder Chloropren-Kautschuk (CR).

In einer besonders bevorzugten Ausführung der Erfindung bestehen das oder die Schaumsubstrate aus Polyurethan.

Die erfindungsgemäßen Formulierungen zeichnen sich außerdem durch eine gute Haftung zu unterschiedlichsten anderen Substraten aus, wie zum Beispiel zu Holz, Papier, Leder, Textilien, Kork, und Kunststoffen (Thermoplaste, Elastomere, Duromere, Komposite) wie unterschiedlichen Polyvinylchloridqualitäten, Polyurethanen, Polyvinylacetat, ABS, Kautschuken, Polyethylvinylacetat, Polycarbonat oder Polyolefinen, wie z.B. gefülltes oder ungefülltes Polypropylen. Überraschenderweise ist mit den erfindungsgemäßen Formulierungen auch bei unpolaren Substraten in der Regel keine Vorbehandlung der Substratoberfläche, beispielsweise durch Primern, Flämmen oder Coronabehandlung, notwendig.

Die Klebstoffzusammensetzungen, enthaltend die erfindungsgemäßen Formulierungen, eignen somit sich zum Verkleben beliebiger Substrate, bevorzugt aus den oben genannten Materialen.

Besonders eignen sich die erfindungsgemäßen Klebstoffe zum Kleben von Schaum auf Schaum, Schaum auf Holz, Schaum auf diversen Kunststoffen, sowie Textilien auf diversen Substraten.

Ganz besonders eignen sich die Klebstoffzusammensetzungen, enthaltend die erfindungsgemäßen Formulierungen, zum Kleben von Schaum auf unpolaren Substraten, insbesondere auf gefülltem oder ungefülltem Polypropylen.

In der Möbelbranche, insbesondere der Sitzmöbelbranche, und dort insbesondere bei der Herstellung von Bürostühlen, ist diese Substratkombination von großer Bedeutung. Daher gehören branchentypische Gegenstände wie Stühle, Sofas und dergleichen, die unter Verwendung der erfindungsgemäßen Formulierungen hergestellt worden sind, gleichfalls zum Umfang der vorliegenden Erfindung.

Ein Klebstoffverbunde, enthaltend mit den erfindungsgemäßen Formulierungen verklebte Substrate und Flächengebilde, sind ebenfalls Gegenstand der vorliegenden Anmeldung.

### Beispiele

Nachstehend wird die Erfindung anhand der Beispiele näher erläutert. Folgende Methoden und Prüfmethoden kamen dabei zum Einsatz:
A) Sprühkoagulationsverfahren:
   Es wird mit einer Standard-Spritzpistole für Zweikomponenten-Dispersionsklebstoffe, nämlich der PILOT III 2K von der Firma Walther Pilot appliziert. Dabei werden der Klebstoff, sowie das Koagulationsmittel CaCl₂ (3 Gew.-%ige Lösung in Wasser) separat in die Sprühpistole gefördert, im Sprühstrahl vermischt und der Klebstoff koaguliert. Da die Vermischung erst im Sprühstrahl stattfindet, ist keine Topfzeit zu beachten. Es wurde das Verhältnis 86 Gew.-% Klebstoffdispersion und 14 Gew.-% CaCl₂-Lösung gewählt.

Die genauen Einstellungen der Spritzpistole sind dem Fachmann prinzipiell bekannt und können ohne ungebührlich hohen Aufwand auf den speziellen Fall zugeschnitten und durch einfache Vorversuche ermittelt werden. Die Mengenverhältnisse und das Auftragsgewicht können durch Rückwiegen der Vorlagebehälter sowie der Substrate ermittelt werden.

Folgende Einstellungen kamen zum Einsatz:
a.) Klebstoffkomponente: Förderdruck 1,3 bar
b.) Koagulationskomponente: Förderdruck 0,3 bar
c.) Zerstäuberluftdruck: 2,8 bar
d.) Bohrung (Düse) f. Komponente Klebstoff: 1,0 mm
e.) Bohrung (Düse) f. Komponente Koagulationsmittel: 0,4 mm
f.) Auftragsgewichte: 130 - 150 g/m² (nass)

### B) Bestimmung der Anfangsfestigkeit bei Schaumsubstraten mit hoher Raumdichte und hoher Rückstellkraft:

Als Prüfmaterial werden PU-Schaumstoffkörper ST 13070 der Firma STN Schaumstoff-Technik Nürnberg GmbH mit den Abmessungen 10 x 5 x 3 cm und einem Raumgewicht von 70 kg/m³ verwendet. Zur Beurteilung der Anfangsfestigkeit werden die Probekörper unmittelbar nach dem Klebstoff-Auftrag mittels Sprühkoagulationsverfahrens (Aufwandmenge 130 - 150 g/m² nass) mit leichtem Handflächendruck in der Mitte geknickt und zusammengefügt. Die Anfangsfestigkeit ist ausreichend, wenn sich der Probekörper trotz der auftretenden Rückstellkräfte nicht öffnet.

### C) Haftung auf Polypropylen

### (Verklebung von Schaumsubstraten mit Polypropylen-Substraten):

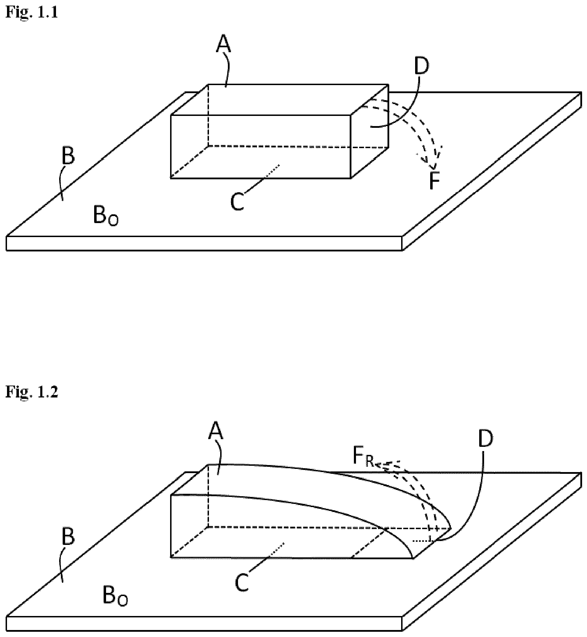

Als Prüfmaterial werden PU-Schaumstoffkörper Recticel^{®} T 20120 der Firma Recticel mit einem Raumgewicht von 20 kg/m³ und den Abmessungen 10 x 5 x 3 cm (Fig. 1, (A)) sowie Polypropylen-Kunststoffsubstrate PP-DWST der Firma SIMONA AG mit den Abmessungen 20 x 10 x 0,4 cm (Fig. 1, (B)) verwendet. Der Klebstoffauftrag erfolgt mittels Sprühkoagulationsverfahrens (Aufwandmenge 130 - 150 g/m² nass) beim Polypropylen-Substrat auf der gesamten Fläche der Oberseite (20 x 10 cm) (Fig. 1, (Bo)) sowie beim Schaumstoffsubstrat auf der gesamten Fläche der Unterseite (10 x 5 cm) (Fig. 1, (C)) sowie zusätzlich auf einer kurzen Kantenfläche (5 x 3 cm) (Fig. 1, (D)).

Nach dem Klebstoffauftrag wird der Schaumstoff auf das Polypropylen gefügt. Dazu wird die mit Klebstoff versehene Oberfläche (C) des Schaumes auf die mit Klebstoff applizierte Seite des Polypropylens mit leichtem Druck händisch gefügt (Fig. 1, (C) gegen (B_{O}). Anschließend wird die mit Klebstoff versehene Kantenfläche des Schaumstoffs (Fig. 1.1, (D)) ebenfalls mit leichten Druck (Fig. 1.1, (F).) händisch auf die beschichte Seite des Polypropylens gefügt (Fig. 1.2, (D)), so dass der Schaumstoffprüfkörper im Bereich der gefügten Kantenfläche (D) und der Oberfläche (A) durch die Rückstellkraft (Fig. 1.2, (F_{R})) unter starker Spannung steht.

Die Bewertung der Haftung erfolgt nach 24 Stunden Lagerung des Prüfkörpers bei Raumtemperatur: Hat sich die gefügte Kantenfläche (Fig. 1.2, (D)) des Schaumstoffsubstrates (Fig. 1.2, (A)) direkt im nassen Zustand, während oder nach der Trocknung wieder von der Oberfläche (Fig. 1.2, (Bo)) des Polypropylen-Substrats (Fig. 1, (B)) abgelöst, ist keine ausreichende Haftung gegeben.

### D) Ermittlung der Glastemperaturen, Schmelztemperaturen und Schmelzenthalpien mittels DSC:

Die Glastemperaturen sowie Schmelztemperaturen und Schmelzenthalpien wurden mittels Differential Scanning Calorimetry (DSC) mit einem Kalorimeter Pyris Diamond DSC der Firma Perkin-Elmer bestimmt. Dazu wurde ein Film durch Rakeln der Dispersion mit 100 µm Nassfilmdicke auf einer Glasplatte hergestellt, 2 Stunden lang abgelüftet, und anschließend wird dieser Film mitsamt der Glasplatte 3 Tage bei Raumtemperatur und 0% rel. Raumfeuchte in einer Trockenbox getrocknet. Anschließend wurde mit 10 mg Probenmaterial aus diesem Film die DSC-Kurve mit folgenden Messbedingungen aufgenommen: Schnelle Abkühlung auf die Starttemperatur -100 °C, danach Beginn von drei Aufheizungen von -100 °C bis +150 °C mit einer Heizrate von 20 K/min und einer Kühlrate von 320 K/min unter Helium-Atmosphäre und Kühlung mit flüssigem Stickstoff. Die Glastemperatur entspricht der Temperatur bei halber Höhe des Glasübergangs, wobei die dritte Aufheizung ausgewertet wurde. Für die Bestimmung der Schmelztemperaturen und Schmelzenthalpien wurde die erste Aufheizung ausgewertet.

### E) Einsatzstoffe

| | |
|---|---|
| Polyester I: | Polyesterdiol aus 1,4-Butandiol und Adipinsäure der OH-Z = 50 |
| Polyester II: | Polyesterdiol aus 1,6-Hexandiol und Phthalsäureanhydrid der OH-Z = 56 |
| Desmodur^{®} H: | Hexamethylendiisocyanat-1,6 (Covestro Deutschland AG, Leverkusen/DE) |
| Desmodur^{®} I: | Isophorondiisocyanat (Covestro Deutschland AG, Leverkusen/DE) |
| Luphen^{®} DDS 3548: | Epoxyharz-modifizierte Polyurethandispersion der BASF AG, Ludwigshafen/DE. mit einem Festkörpergehalt von 45 Gew.-%. Das enthaltene Polymer ist nach der Trocknung teilkristallin mit einer Schmelztemperatur von 41,5 °C und einer Schmelzenthalpie von 34,4 J/g. |
| Desavin^{®}: | Di(phenoxyethyl)formal (Covestro Deutschland AG, Leverkusen/D) (Weichmacherharz) |
| DBT: | Di-n-Butyl-Terephthalat (Eastman, Kingsprot/US) (Weichmacherharz) |
| Synegis^{®} 9100: | Dipropylenglycoldibenzoat (Synegis, Mont-Saint-Guibert/Belgien) (Weichmacherharz) |
| Aquatac^{®} XR-4343: | wässrige Kolophonium Ester Dispersion mit 60 Gew.-% Festkörper (KratonCorporation, Almere/Netherlands) (Tackifierharz) |

### Beispiel 1:

Herstellung einer wässrigen Polyurethan- bzw. Polyurethan-Harnstoff-Dispersion.

450 g Polyester I werden 1 Stunde bei 110 °C und 15 mbar entwässert. Bei 80 °C werden 30,11 g Desmodur^{®} H und anschließend 20,14 g Desmodur^{®} I zugegeben. Die Mischung wird bei 80 bis 90 °C gerührt, bis ein konstanter Isocyanatgehalt von 1,15 Gew.-% erreicht ist. Das Reaktionsgemisch wird in 750 g Aceton gelöst und dabei auf 48 °C abgekühlt. In die homogene Lösung wird eine Lösung aus 5,95 g Natriumsalz der N-(2-Aminoethyl)-2-aminoethansulfonsäure und 2,57 g Diethanolamin in 65 g Wasser unter kräftigem Rühren gegeben. Nach 30 Minuten wird durch Zugabe von 700 g Wasser dispergiert. Nach destillativer Abtrennung des Acetons wird eine wässrige Polyurethan-Polyharnstoff-Dispersion mit einen Feststoffgehalt von 40,0 Gew.-% erhalten.

Das enthaltene Polymer ist nach der Trocknung teilkristallin mit einer Schmelztemperatur von 48 °C und einer Schmelzenthalpie von 50,4 J/g.

### Beispiel 2:

Herstellung einer wässrigen Polyurethan- bzw. Polyurethan-Harnstoff-Dispersion.

798,3 g Polyester I werden 1 Stunde bei 110 °C und 15 mbar entwässert. Anschließend werden bei 80 °C 13,5 g 1,4-Butandiol und 157,0 g Desmodur^{®} I zugegeben und die Mischung wird bei 90 bis 100 °C gerührt, bis ein konstanter Isocyanatgehalt von 1,72 % erreicht ist. Das Reaktionsgemisch wird in 1450 g Aceton gelöst und dabei auf 48 °C abgekühlt. In die homogene Lösung wird unter Rühren eine Lösung aus 16,5 g Natriumsalz der N-(2-Aminoethyl)-2-aminoethansulfonsäure und 7,7 g Diethanolamin in 195 g Wasser gegeben und weitere 30 Minuten bei 48 °C gerührt. Anschließend wird unter kräftigem Rühren durch Zugabe von 1440 g Wasser dispergiert. Nach destillativer Abtrennung des Acetons wird eine wässrige Polyurethan-Polyharnstoff-Dispersion mit einen Feststoffgehalt von 38,0 Gew.-% erhalten.

Das enthaltene Polymer ist nach der Trocknung teilkristallin mit einer Schmelztemperatur von 49,8 °C und einer Schmelzenthalpie von 45,9 J/g.

### Beispiel 3:

Herstellung einer wässrigen Polyurethan- bzw. Polyurethan-Harnstoff-Dispersion.

1215 g Polyester II werden 1 Stunde bei 110 °C und 15 mbar entwässert. Bei 80 °C werden 4,6 g 1,6-Hexandiol und 179,0 g Desmodur^{®} H zugegeben und die Mischung wird 90 °C gerührt, bis ein konstanter Isocyanatgehalt von 2,28 Gew.-% erreicht ist. Das Reaktionsgemisch wird in 2490 g Aceton gelöst und dabei auf 48 °C abgekühlt. In die homogene Lösung wird eine Lösung aus 31,9 g Natriumsalz der N-(2-Aminoethyl)-2-aminoethansulfonsäure in 300 g Wasser unter kräftigem Rühren gegeben. Nach 30 Minuten wird durch Zugabe von 1150 g Wasser dispergiert. Nach destillativer Abtrennung des Acetons wird eine wässrige Polyurethan-Polyharnstoff-Dispersion mit einen Feststoffgehalt von 50,0 Gew.-% erhalten.

Das enthaltene Polymer ist nach der Trocknung amorph (ohne Schmelzpeak im DSC).

### Beispiel 4: (Vergleich)

Bestimmung der Anfangsfestigkeit und der Haftung auf Polypropylen mit der Dispersion aus Beispiel 1: die Haftung auf Polypropylen ist unzureichend (siehe Tabelle 1).

### Beispiel 5: (Vergleich)

Herstellung einer Formulierung aus der PUD aus Beispiel 1 und einer Tackifierharzdispersion sowie Bestimmung der Anfangsfestigkeit und der Haftung auf Polypropylen.

Zu 91,7 g der Polyurethandispersion aus Beispiel 1 werden unter kräftigem Rühren mit einem Scheibenrührer 8,3 g Aquatac^{®} XR-4343 zugegeben, weitere 4 h gerührt und anschließend 12 h bei Raumtemperatur gelagert. Bezogen auf den Feststoff enthält die Formulierung 88,0 Gew.-% Polyurethanpolymer und 12,0 Gew.-% Tackifierharz.

Mit der Formulierung werden die Anfangsfestigkeit und die Haftung auf Polypropylen bestimmt: die Haftung auf Polypropylen ist unzureichend (siehe Tabelle 1).

### Beispiel 6: (Vergleich)

Herstellung einer Formulierung aus der PUD aus Beispiel 1 und einem Weichmacherharz sowie Bestimmung der Anfangsfestigkeit und der Haftung auf Polypropylen.

Zu 92,7 g der Polyurethandispersion aus Beispiel 1 werden unter kräftigem Rühren mit einem Scheibenrührer 7,3 g Desavin^{®} zugegeben, weitere 4 h gerührt und anschließend 12 h bei Raumtemperatur gelagert. Bezogen auf den Feststoff enthält die Formulierung 83,6 Gew.-% Polyurethanpolymer und 16,4 Gew.-% Weichmacherharz.

Mit der Formulierung werden die Anfangsfestigkeit und die Haftung auf Polypropylen bestimmt: die Haftung auf Polypropylen ist unzureichend (siehe Tabelle 1).

### Beispiel 7: (Vergleich)

Herstellung einer Formulierung aus der PUD aus Beispiel 1 und einem Weichmacherharz sowie Bestimmung der Anfangsfestigkeit und der Haftung auf Polypropylen.

Zu 93,5 g der Polyurethandispersion aus Beispiel 1 werden unter kräftigem Rühren mit einem Scheibenrührer 6,5 g Synegis^{®} 9100 zugegeben, weitere 4 h gerührt und anschließend 12 h bei Raumtemperatur gelagert. Bezogen auf den Feststoff enthält die Formulierung 85,2 Gew.-% Polyurethanpolymer und 14,8 Gew.-% Weichmacherharz.

Mit der Formulierung werden die Anfangsfestigkeit und die Haftung auf Polypropylen bestimmt: die Haftung auf Polypropylen ist unzureichend (siehe Tabelle 1).

### Beispiel 8: (erfindungsgemäß)

Herstellung einer Formulierung aus der PUD aus Beispiel 1, einem Tackifierharz und einem Weichmacherharz sowie Bestimmung der Anfangsfestigkeit und der Haftung auf Polypropylen.

Zu 85,6 g der Polyurethandispersion aus Beispiel 1 werden unter kräftigem Rühren mit einem Scheibenrührer nacheinander 7,7 g Aquatac^{®} XR-4343 und 6,7 g Desavin^{®} zugegeben, weitere 4 h gerührt und anschließend 12 h bei Raumtemperatur gelagert. Bezogen auf den Feststoff enthält die Formulierung 75,2 Gew.-% Polyurethanpolymer, 10,1 Gew.-% Tackifierharz und 14,7 Gew.-% Weichmacherharz.

Mit der Formulierung werden die Anfangsfestigkeit und die Haftung auf Polypropylen bestimmt: sowohl die Anfangsfestigkeit als auch die Haftung auf Polypropylen sind gut (siehe Tabelle 1).

### Beispiel 9: (erfindungsgemäß)

Herstellung einer Formulierung aus der PUD aus Beispiel 1, einem Tackifierharz und einem Weichmacherharz sowie Bestimmung der Anfangsfestigkeit und der Haftung auf Polypropylen.

Zu 85,6 g der Polyurethandispersion aus Beispiel 1 werden unter kräftigem Rühren mit einem Scheibenrührer nacheinander 7,7 g Aquatac^{®} XR-4343 und 6,7 g DBT zugegeben, weitere 4 h gerührt und anschließend 12 h bei Raumtemperatur gelagert. Bezogen auf den Feststoff enthält die Formulierung 75,2 Gew.-% Polyurethanpolymer, 10,1 Gew.-% Tackifierharz und 14,7 Gew.-% Weichmacherharz.

Mit der Formulierung werden die Anfangsfestigkeit und die Haftung auf Polypropylen bestimmt: sowohl die Anfangsfestigkeit als auch die Haftung auf Polypropylen sind gut (siehe Tabelle 1).

### Beispiel 10: (erfindungsgemäß)

Herstellung einer Formulierung aus der PUD aus Beispiel 1, einem Tackifierharz und einem Weichmacherharz sowie Bestimmung der Anfangsfestigkeit und der Haftung auf Polypropylen.

Zu 84,0 g der Polyurethandispersion aus Beispiel 1 werden unter kräftigem Rühren mit einem Scheibenrührer nacheinander 9,0 g Aquatac^{®} XR-4343 und 7,0 g Synegis^{®} 9100 zugegeben, weitere 4 h gerührt und anschließend 12 h bei Raumtemperatur gelagert. Bezogen auf den Feststoff enthält die Formulierung 73,0 Gew.-% Polyurethanpolymer, 11,7 Gew.-% Tackifierharz und 15,2 Gew.-% Weichmacherharz.

Mit der Formulierung werden die Anfangsfestigkeit und die Haftung auf Polypropylen bestimmt: sowohl die Anfangsfestigkeit als auch die Haftung auf Polypropylen sind gut (siehe Tabelle 1).

### Beispiel 11: (erfindungsgemäß)

Herstellung einer Formulierung aus der PUD aus Beispiel 2, einem Tackifierharz und einem Weichmacherharz sowie Bestimmung der Anfangsfestigkeit und der Haftung auf Polypropylen.

Zu 87,0 g der Polyurethandispersion aus Beispiel 2 werden unter kräftigem Rühren mit einem Scheibenrührer nacheinander 8,7 g Aquatac^{®} XR-4343 und 4,3 g Desavin^{®} zugegeben, weitere 4 h gerührt und anschließend 12 h bei Raumtemperatur gelagert. Bezogen auf den Feststoff enthält die Formulierung 77,6 Gew.-% Polyurethanpolymer, 12,3 Gew.-% Tackifierharz und 10,1 Gew.-% Weichmacherharz.

Mit der Formulierung werden die Anfangsfestigkeit und die Haftung auf Polypropylen bestimmt: sowohl die Anfangsfestigkeit als auch die Haftung auf Polypropylen sind gut (siehe Tabelle 1).

### Beispiel 12: (Vergleich)

Herstellung einer Formulierung aus der PUD aus Beispiel 1, einem Tackifierharz und einem Weichmacherharz sowie Bestimmung der Anfangsfestigkeit und der Haftung auf Polypropylen.

Zu 78,0 g der Polyurethandispersion aus Beispiel 1 werden unter kräftigem Rühren mit einem Scheibenrührer nacheinander 9,0 g Aquatac^{®} XR-4343 und 13,0 g Synegis^{®} 9100 zugegeben, weitere 4 h gerührt und anschließend 12 h bei Raumtemperatur gelagert. Bezogen auf den Feststoff enthält die Formulierung 62,9 Gew.-% Polyurethanpolymer, 10,9 Gew.-% Tackifierharz und 26,2 Gew.-% Weichmacherharz.

Mit der Formulierung werden die Anfangsfestigkeit und die Haftung auf Polypropylen bestimmt: die Haftung auf Polypropylen ist unzureichend (siehe Tabelle 1).

### Beispiel 13: (Vergleich)

Bestimmung der Anfangsfestigkeit und der Haftung auf Polypropylen mit der Dispersion aus Beispiel 3: sowohl die Anfangsfestigkeit als auch die Haftung auf Polypropylen sind unzureichend (siehe Tabelle 1).

### Beispiel 14: (Vergleich)

Herstellung einer Formulierung aus der PUD aus Beispiel 3, einem Tackifierharz und einem Weichmacherharz sowie Bestimmung der Anfangsfestigkeit und der Haftung auf Polypropylen.

Zu 82,7 g der Polyurethandispersion aus Beispiel 3 werden unter kräftigem Rühren mit einem Scheibenrührer nacheinander 9,3 g Aquatac^{®} XR-4343 und 5,0 g Desavin^{®} zugegeben, weitere 4 h gerührt und anschließend 12 h bei Raumtemperatur gelagert. Bezogen auf den Feststoff enthält die Formulierung 79,6 Gew.-% Polyurethanpolymer, 11,8 Gew.-% Tackifierharz und 9,6 Gew.-% Weichmacherharz.

Mit der Formulierung werden die Anfangsfestigkeit und die Haftung auf Polypropylen bestimmt: sowohl die Anfangsfestigkeit als auch die Haftung auf Polypropylen sind unzureichend (siehe Tabelle 1).

### Beispiel 15: (Vergleich)

Bestimmung der Anfangsfestigkeit und der Haftung auf Polypropylen mit Luphen^{®} DDS 3548: sowohl die Anfangsfestigkeit als auch die Haftung auf Polypropylen sind unzureichend (siehe Tabelle 1).

### Beispiel 16: (Vergleich)

Herstellung einer Formulierung aus Luphen^{®} DDS 3548, einem Tackifierharz und einem Weichmacherharz sowie Bestimmung der Anfangsfestigkeit und der Haftung auf Polypropylen.

Zu 83,9 g Luphen^{®} DDS 3548 werden unter kräftigem Rühren mit einem Scheibenrührer nacheinander 8,6 g Aquatac^{®} XR-4343 und 7,5 g Desavin^{®} zugegeben, weitere 4 h gerührt und anschließend 12 h bei Raumtemperatur gelagert. Bezogen auf den Feststoff enthält die Formulierung 74,9 Gew.-% Polymer Luphen^{®} DDS 3548, 10,2 Gew.-% Tackifierharz und 14,9 Gew.-% Weichmacherharz.

Mit der Formulierung werden die Anfangsfestigkeit und die Haftung auf Polypropylen bestimmt: sowohl die Anfangsfestigkeit als auch die Haftung auf Polypropylen sind unzureichend (siehe Tabelle 1).

**Tabelle 1: Auswertung der erfindungsgemäßen Beispiele und der Vergleichsbeispiele**

| **Beispiel** | **Zusammensetzung** | **Anfangsfestigkeit (Prüfmethode B)** | **Haftung auf PP (Prüfmethode C)** |
|---|---|---|---|
| 4 (Vergleich) | PUD aus Bsp. 1 | ja | nein |
| 5 (Vergleich) | PUD aus Bsp.1, Aquatac^{®} XR-4343 | ja | nein |
| 6 (Vergleich) | PUD aus Bsp.1, Desavin^{®} | ja | nein |
| 7 (Vergleich) | PUD aus Bsp.1, Synegis^{®} 9100 | ja | nein |
| 8 (erfindungsgemäß) | PUD aus Bsp.1, Aquatac^{®} XR-4343, Desavin^{®} | ja | ja |
| 9 (erfindungsgemäß) | PUD aus Bsp.1, Aquatac^{®} XR-4343, DBT | ja | ja |
| 10 (erfindungsgemäß) | PUD aus Bsp.1, Aquatac^{®} XR-4343, Synegis^{®} 9100 | ja | ja |
| 11 (erfindunsgemäß) | PUD aus Bsp.2, Aquatac^{®} XR-4343, Desavin^{®} | ja | ja |
| 12 (Vergleich) | PUD aus Bsp.1, Aquatac^{®} XR-4343, Synegis^{®} 9100 | ja | nein |
| 13 (Vergleich) | PUD aus Bsp.3 | nein | nein |
| 14 (Vergleich) | PUD aus Bsp.3, Aquatac^{®} XR-4343, Desavin^{®} | nein | nein |
| 15 (Vergleich) | Luphen^{®} DDS 3548 | nein | nein |
| 16 (Vergleich) | Luphen^{®} DDS 3548, Aquatac^{®} XR-4343, Desavin^{®} | nein | nein |

## Patentansprüche

1. Formulierungen enthaltend eine Mischung aus
I. einer wässrigen Polyurethan- bzw. Polyurethan-Harnstoff-Dispersion, enthaltend als disperse Phase ein Polymer A), das nach der Trocknung teilkristallin oder kristallin ist und eine Schmelztemperatur im Bereich von 30 bis 80 °C und eine Schmelzenthalpie von ≥ 35 J/g besitzt,
II. mindestens einem Weichmacherharz B)
III. mindestens einem Tackifierharz C)
**dadurch gekennzeichnet, dass** die Mischung, bezogen auf den insgesamt enthaltenen Feststoff,
60 - 90 Gew.-% Polymer A),
5 - 20 Gew.-% Weichmacherharz B) und
5 - 20 Gew.-% Tackifierharz C) enthält
und sich die Mengenanteile von A), B) und C) zu 100 Gew.-% addieren,
wobei ein Polymer teilkristallin oder kristallin ist, wenn es in einer DSC-Messung nach DIN 65467 bei einer Aufheizrate von 20 K/min einen Schmelzpeak aufweist.

2. Formulierungen gemäß Anspruch 1, **dadurch gekennzeichnet, dass** die Mischung, bezogen auf den insgesamt enthaltenen Feststoff,
66 - 85 Gew.-% Polymer A),
8 - 18 Gew.-% Weichmacherharz B) und
7 - 16 Gew.-% Tackifierharz C)
enthält und sich die Mengenanteile von A), B) und C) zu 100 Gew.-% addieren.

3. Formulierungen gemäß Anspruch 1, **dadurch gekennzeichnet, dass** die Mischung, bezogen auf den insgesamt enthaltenen Feststoff,
70 - 81 Gew.-% Polymer A),
10 - 16 Gew.-% Weichmacherharz B) und
9 - 14 Gew.-% Tackifierharz C),
enthält und sich die Mengenanteile von A), B) und C) zu 100 Gew.-% addieren.

4. Formulierungen gemäß Anspruch 1, **dadurch gekennzeichnet, dass** die Mischung, bezogen auf den insgesamt enthaltenen Feststoff,
72 - 80 Gew.-% Polymer A),
10 - 15,5 Gew.-% Weichmacherharz B) und
10 - 12,5 Gew.-% Tackifierharz C),
enthält und sich die Mengenanteile von A), B) und C) zu 100 Gew.-% addieren.

5. Formulierungen gemäß Ansprüchen 1 bis 4, **dadurch gekennzeichnet, dass** das Polymer A), das nach der Trocknung teilkristallin oder kristallin ist, eine Schmelztemperatur im Bereich von 35 °C bis 80 °C, besonders bevorzugt im Bereich von 40 °C bis 70 °C und ganz besonders bevorzugt im Bereich von 42 °C bis 55 °C aufweist.

6. Formulierungen gemäß Ansprüchen 1 bis 5, **dadurch gekennzeichnet, dass** das Polymer A), das nach der Trocknung teilkristallin oder kristallin ist, eine Schmelzenthalpie von ≥ 35 J/g, bevorzugt ≥ 40 J/g, besonders bevorzugt ≥ 45 J/g aufweist.

7. Formulierungen gemäß Ansprüchen 1 bis 6, **dadurch gekennzeichnet, dass** als Weichmacher B) schwerflüchtige niedermolekulare, polare Gruppen tragende Verbindungen, vorzugsweise Di(phenoxyethyl)formal, Dibutylterephthalat, Alkylsulfonsäureester des Phenols sowie Ester auf Basis Benzoesäure, eingesetzt werden.

8. Formulierungen gemäß Ansprüchen 1 bis 7, **dadurch gekennzeichnet, dass** als Tackifierharze C) Kolophoniumharze und modifizierte Kolophoniumharze, bevorzugt Harzester auf Basis von Kolophonium und besonders bevorzugt wässrige Dispersionen von Kolophoniumharzestern ("rosin ester dispersions") eingesetzt werden.

9. Verfahren zur Verklebung von Substraten durch Vermischung einer Formulierung gemäß Ansprüchen 1 bis 8 mit einem Koagulationsmittel in einer 2K-Sprühpistole, wobei das Koagulationsmittel separat in die 2K-Sprühpistole gefördert und im Sprühstrahl vermischt wird und die Koagulation der Dispersion im Sprühstrahl auf dem Weg zur Oberfläche des ersten Substrats stattfindet, sich auf dieser bei Auftreffen ein Film bildet, der in noch nassem Zustand sofort klebrig ist und im nassem Zustand die zweite Oberfläche sofort gefügt wird, erforderlichenfalls unter Druck auf die Substrate gegen die Klebfläche.

10. Verwendung der Formulierungen gemäß Ansprüchen 1 bis 8 zum Kleben von Schaum auf Schaum, Schaum auf Holz, Schaum auf Kunststoffen, sowie von Textilien auf diversen Substraten.

11. Verwendung gemäß Anspruch 10, **dadurch gekennzeichnet, dass** es sich bei mindestens einem der zu verklebenden Substrate um ein unpolares Substrat, insbesondere um gefülltes oder ungefülltes Polypropylen handelt.

12. Verwendung gemäß Anspruch 10, **dadurch gekennzeichnet, dass** es sich bei mindestens einem der zu verklebenden Substrate um ein Schaumsubstrat ausgewählt aus der Gruppe umfassend Polyurethan (zum Beispiel Polyether- und Polyester-Schäume), Kautschuk-Schaum (beispielsweise aus Naturkautschuk (NR), Styrol-Butadien-Kautschuk (SBR), Ethylen-Propylen-Dien-Polymer (EPDM), Butadien-Acrylnitril-Kautschuk (NBR) oder Chloropren-Kautschuk (CR)) handelt.

13. Möbel, hergestellt unter Verwendung der Formulierungen gemäß Ansprüchen 1 bis 8.

## Claims

1. Formulations containing a mixture of
I. an aqueous polyurethane or polyurethane-urea dispersion, containing as disperse phase a polymer A) which after drying is semicrystalline or crystalline and has a melting temperature in the range from 30 to 80°C and an enthalpy of fusion of ≥ 35 J/g,
II. at least one plasticizer resin B),
III. at least one tackifier resin C),
**characterized in that** the mixture, based on the solids present overall, contains
60% - 90% by weight of polymer A),
5% - 20% by weight of plasticizer resin B) and
5% - 20% by weight of tackifier resin C),
and the amounts by weight of A), B) and C) add up to 100% by weight,
wherein a polymer is semicrystalline or crystalline when it exhibits a melting peak in a DSC measurement in accordance with DIN 65467 with a heating rate of 20 K/min.

2. Formulations according to Claim 1, **characterized in that** the mixture, based on the solids present overall, contains
66% - 85% by weight of polymer A),
8% - 18% by weight of plasticizer resin B) and
7% - 16% by weight of tackifier resin C),
and the amounts by weight of A), B) and C) add up to 100% by weight.

3. Formulations according to Claim 1, **characterized in that** the mixture, based on the solids present overall, contains
70% - 81% by weight of polymer A),
10% - 16% by weight of plasticizer resin B) and
9% - 14% by weight of tackifier resin C),
and the amounts by weight of A), B) and C) add up to 100% by weight.

4. Formulations according to Claim 1, **characterized in that** the mixture, based on the solids present overall, contains
| | |
|---|---|
| 72% - 80% | by weight of polymer A), |
| 10% - 15.5% | by weight of plasticizer resin B) and |
| 10% - 12.5% | by weight of tackifier resin C), |
and the amounts by weight of A), B) and C) add up to 100% by weight.

5. Formulations according to Claims 1 to 4, **characterized in that** the polymer A) which after drying is semicrystalline or crystalline has a melting temperature in the range from 35°C to 80°C, particularly preferably in the range from 40°C to 70°C and very particularly preferably in the range from 42°C to 55°C.

6. Formulations according to Claims 1 to 5, **characterized in that** the polymer A) which after drying is semicrystalline or crystalline has an enthalpy of fusion of ≥ 35 J/g, preferably ≥ 40 J/g, particularly preferably ≥ 45 J/g.

7. Formulations according to Claims 1 to 6, **characterized in that**, as the plasticizer B), use is made of non-volatile, low molecular weight compounds bearing polar groups, preferably di(phenoxyethyl) formal, dibutyl terephthalate, alkylsulfonic esters of phenol and esters based on benzoic acid.

8. Formulations according to Claims 1 to 7, **characterized in that**, as tackifier resins C), use is made of rosins and modified rosins, preferably resin esters based on rosin and particularly preferably aqueous dispersions of rosin esters (rosin ester dispersions).

9. Process for adhesively bonding substrates by mixing a formulation according to Claims 1 to 8 with a coagulant in a two-component spray gun, wherein the coagulant is conveyed separately into the two-component spray gun and is mixed in the spray jet and the coagulation of the dispersion in the spray jet takes place on the path to the surface of the first substrate, on impact with said substrate forms a film which is immediately tacky in the still-wet state and in the wet state the second surface is immediately joined, if required with pressure on the substrates towards the adhesive surface.

10. Use of the formulations according to Claims 1 to 8 for the bonding of foam on foam, foam on wood, foam on plastics, and of textiles on various substrates.

11. Use according to Claim 10, **characterized in that** at least one of the substrates to be adhesively bonded is a nonpolar substrate, in particular is filled or unfilled polypropylene.

12. Use according to Claim 10, **characterized in that** at least one of the substrates to be adhesively bonded is a foam substrate selected from the group comprising polyurethane (for example polyether and polyester foams), foam rubber (for example formed from natural rubber (NR), styrene-butadiene rubber (SBR), ethylene-propylene-diene polymer (EPDM), butadiene-acrylonitrile rubber (NBR) or chloroprene rubber (CR)).

13. Item of furniture, produced using the formulations according to Claims 1 to 8.

## Revendications

1. Formulations contenant un mélange
**I.** d'une dispersion aqueuse de polyuréthane ou polyuréthane-urée, contenant comme phase dispersée un polymère A), qui après séchage est partiellement cristallin ou cristallin et présente une température de fusion dans la plage de 30 à 80 °C et une enthalpie de fusion ≥ 35 J/g,
**II.** d'au moins une résine plastifiante B)
**III.** d'au moins une résine tackifiante C)
**caractérisées en ce que** le mélange contient, par rapport à la totalité des solides contenus,
60 à 90 % en poids du polymère A),
5 à 20 % en poids de la résine plastifiante B) et
5 à 20 % en poids de la résine tackifiante C)
la somme des proportions pondérales de A), B) et C) étant de 100 % en poids,
un polymère étant partiellement cristallin ou cristallin quand, dans une mesure par ATD selon DIN 65467 pour une vitesse de montée en température de 20 K/min, il présente un pic de fusion.

2. Formulations selon la revendication 1, **caractérisées en ce que** le mélange contient, par rapport à la totalité des solides contenus,
66 à 85 % en poids du polymère A),
8 à 18 % en poids de la résine plastifiante B) et
7 à 16 % en poids de la résine tackifiante C),
la somme des pourcentages en poids de A), B) et C) étant de 100 % en poids.

3. Formulations selon la revendication 1, **caractérisées en ce que** le mélange contient, par rapport à la totalité des solides contenus,
70 à 81 % en poids du polymère A),
10 à 16 % en poids de la résine plastifiante B) et
9 à 14 % en poids de la résine tackifiante C),
la somme des proportions en poids de A), B) et C) étant de 100 % en poids.

4. Formulations selon la revendication 1, **caractérisées en ce que** le mélange contient, par rapport à la totalité des solides contenus,
72 à 80 % en poids du polymère A),
10 à 15,5 % en poids de la résine plastifiante B) et
10 à 12,5 % en poids de la résine tackifiante C),
la somme des proportions en poids de A), B) et C) étant de 100 % en poids.

5. Formulations selon les revendications 1 à 4, **caractérisées en ce que** le polymère A) qui après le séchage est partiellement cristallin ou cristallin, présente une température de fusion dans la plage de 35 °C à 80 °C, d'une manière particulièrement préférée dans la plage de 40 °C à 70 °C et d'une manière tout particulièrement préférée, dans la plage de 42 °C à 55 °C.

6. Formulations selon les revendications 1 à 5, **caractérisées en ce que** le polymère A) qui après le séchage est partiellement cristallin ou cristallin présente une enthalpie de fusion ≥ 35 J/g, de préférence ≥ 40 J/g, d'une manière particulièrement préférée ≥ 45 J/g.

7. Formulations selon les revendications 1 à 6, **caractérisées en ce qu'**on utilise comme plastifiant B) des composés portant des groupes polaires peu volatils à faible masse moléculaire, de préférence le di(phénoxyéthyl)formal, le téréphtalate de dibutylène, les esters des acides alkylsulfoniques du phénol ainsi que les esters à base d'acide benzoïque.

8. Formulations selon les revendications 1 à 7, **caractérisées en ce qu'**on utilise comme résines tackifiantes C) des résines de colophane et des résines de colophane modifiées, de préférence des esters de résine à base de colophane et d'une manière particulièrement préférée, des dispersions aqueuses d'esters de résine de colophane (« rosin ester dispersions »).

9. Procédé de collage de substrats par mélange d'une formulation selon les revendications 1 à 8 avec un agent de coagulation dans un pistolet pulvérisateur bicomposant, l'agent de coagulation étant refoulé séparément dans le pistolet pulvérisateur bicomposant et étant mélangé dans le jet de pulvérisation, et la coagulation de la dispersion ayant lieu dans le jet de pulvérisation sur le trajet allant vers la surface du premier substrat, un film se formant lorsqu'il atteint cette dernière, film qui, à l'état encore humide, est immédiatement collant et, à l'état humide, assure une liaison immédiate de la seconde surface, si nécessaire sous l'effet d'une pression appliquée sur les substrats contre la surface de collage.

10. Utilisation des formulations selon les revendications 1 à 8 pour un collage mousse sur mousse, mousse sur bois, mousse sur plastiques, ainsi que de textiles sur différents substrats.

11. Utilisation selon la revendication 10, **caractérisée en ce que**, pour ce qui concerne au moins l'un des substrats à coller, il s'agit d'un substrat non polaire, en particulier de polypropylène chargé ou non chargé.

12. Utilisation selon la revendication 10, **caractérisée en ce que**, pour ce qui concerne au moins l'un des substrats à coller, il s'agit d'un substrat de mousse choisi dans le groupe comprenant le polyuréthane (par exemple les mousses de polyéther et de polyuréthane), les caoutchouc-mousses (par exemple le caoutchouc naturel (NR), le caoutchouc styrène-butadiène (SBR), le caoutchouc éthylène-propylène-diène-polymère (EPDM), le caoutchouc butadiène-acrylonitrile (NBR) ou le caoutchouc chloroprène (CR)).

13. Meuble fabriqué par utilisation des formulations selon les revendications 1 à 8.
